# EUROPEAN PATENT SPECIFICATION

(11) **EP 4 261 985 B1**
(45) Date of publication and mention of the grant of the patent: **25.11.2026**
(21) Application number: 22861645.4
(22) Date of filing: 19.08.2022
(51) Int. Cl.: H01M 10/613, H01M 10/625, H01M 10/617, H01M 10/6556, H01M 10/647, H01M 50/204, H01M 50/249, H01M 50/264

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 23.08.2021 KR 20210110996
(43) Date of publication of application: 18.10.2023
(73) Proprietor: LG Energy Solution, Ltd., Seoul 07335 (KR)
(72) Inventor: JEON, Bora, Daejeon 34122 (KR); HONG, Soon Chang, Daejeon 34122 (KR); LEE, Hyoungsuk, Daejeon 34122 (KR); KIM, Donghyun, Daejeon 34122 (KR)
(74) Representative: Goddar, Heinz J.
(86) International application number: PCT/KR2022/012456
(87) International publication number: WO 2023/027435

(56) References cited:
- EP-A1- 3 573 129
- JP-A- 2016 219 262
- JP-A- 2017 142 934
- JP-A- 2020 202 148
- JP-B2- 6 299 681
- KR-A- 20130 057 530
- KR-A- 20190 087 781
- KR-A- 20190 087 781

## Description

### [TECHNICAL FIELD]

The present disclosure relates to a battery pack and a device including the same, and more particularly, to a battery pack provided having improved cooling performance, and a device including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are arranged, but in the case of a secondary battery used for a middle or large-sized device such as an automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BMS (battery management system) and a cooling system to form a battery pack.

JP 6 299681 B2 relates to a cooling structure of a battery for an electric vehicle.

EP 3 579 129 A1 relates to a battery pack having a space efficient loading structure for battery modules and a drain structure for preventing a leaked coolant from flowing into the battery modules.

KR 2019 0087781 A relates to a battery module and a battery pack.

When the temperature of the secondary battery rises higher than an appropriate temperature, the performance of the secondary battery may be deteriorated, and in the worst case, there is also a risk of an explosion or ignition. In particular, a large number of secondary batteries, that is, a battery module or a battery pack having battery cells, can add up the heat generated from the large number of battery cells in a narrow space, so that the temperature can rise more quickly and excessively. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, in the case of a middle or large-sized battery module included in a vehicle battery pack, it is frequently exposed to direct sunlight and may be placed under high-temperature conditions such as summer or desert areas.

Therefore, as the demand for increased battery pack capacity and improved heat dissipation performance are consecutive, it may be practically necessary to develop battery packs equipped with effective cooling systems.

### [DETAILED DESCRIPTION OF THE INVENTION]

### [Technical Problem]

It is an object of the present invention to provide a battery pack provided having improved cooling performance, and a device including the same.

### [Technical Solution]

According to one embodiment of the present invention, there is provided a battery pacl according to claim 1, comprising: a battery module including battery cells; a pack housing that houses the battery module; and a fixing bracket that fixes the battery module to the pack housing. The fixing bracket comprises a lower plate adhered closely to the upper surface of the battery module and an upper plate located on the lower plate. A cooling flow path through which coolant passes is formed between the upper plate and the lower plate.

The fixing bracket may comprise an inlet port and an outlet port that are connected to the cooling flow path.

The lower plate comprises a fixing part adhered closely to the upper surface of the battery module and a fastening part extending from the fixing part to a bottom part of the pack housing.

The fastening part may be fastened to a bottom part of the pack housing.

A fastening hole is formed in the fastening part, and a bolt part may pass through the fastening hole to be fastened to the bottom part of the pack housing.

The upper plate comprises a main body part and a junction part extending from the main body part and joined to the lower plate.

The junction part and the lower plate may be weld-joined.

The cooling flow path may be formed between the main body part and the lower plate.

A plurality of protrusions that protrudes upward may be formed on the main body part.

The protrusions may be arranged along a direction parallel to the cooling flow path.

A recessed part that is recessed downward may be formed in the main body part, and the main body part may comprise a plurality of passage parts partitioned by the recessed part.

The passage parts may be arranged along a direction parallel to the cooling flow path.

The battery module may be formed by a plurality of numbers, and the fixing bracket may fix a plurality of battery modules to the pack housing.

A coolant pipe may be located between the upper plate and the lower plate, and the coolant may flow along the inside of the coolant pipe to form the cooling flow path.

According to another embodiment of the present invention, there is provided a device comprising the above-mentioned battery pack.

### [Advantageous Effects]

According to embodiments of the present invention, the battery module is fixed to the pack housing by a fixing bracket having a cooling function, thereby capable of cooling the upper part of the battery module. This improves the cooling performance of the battery cells and reduces the cooling deviation between the battery cells.

The effects of the present invention are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view showing a battery pack according to one embodiment of the present invention;
Fig. 2 is a perspective view showing a battery module included in the battery pack of Fig. 1;
Fig. 3 is an exploded perspective view of the battery module of Fig. 2;
Fig. 4 is a perspective view showing a battery cell according to one embodiment of the present invention;
Fig. 5 is a perspective view showing a fixing bracket according to one embodiment of the present invention;
Fig. 6 is a cross-sectional view which shows a cross section taken along the cutting line A-A' of Fig. 1; and
Fig. 7 is a cross-sectional view which shows a cross section taken along the cutting line B-B' of Fig. 1.

### [DETAILED DESCRIPTION OF THE EMBODIMENTS]

Hereinafter, various embodiments of the present invention; will be described in detail with reference to the accompanying drawings so that those skilled in the art can easily carry out them.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

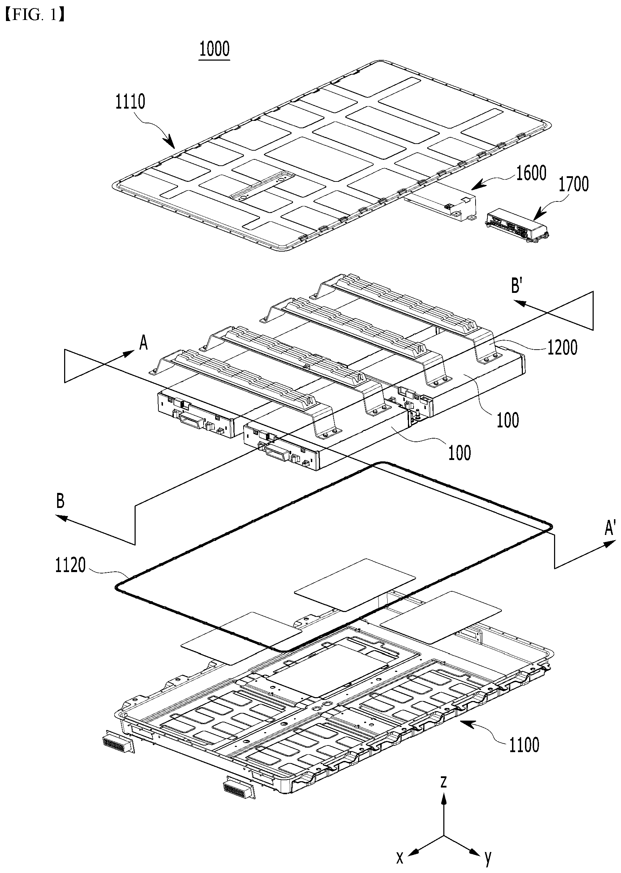

Fig. 1 is an exploded perspective view showing a battery pack according to one embodiment of the present invention.

Referring to Fig. 1, a battery pack 1000 according to one embodiment of the present invention includes a battery module 100, a pack housing 1100 that houses the battery module 100; and a fixing bracket 1200 that fixes the battery module 100 to the pack housing 1100. The number of battery modules 100 is not particularly limited, and one or a plurality of battery modules 100 may be housed in the pack housing 1100. In Fig, 1, a state in which four battery modules 100 are housed in the pack housing 1100 is shown as an example.

The pack housing 1100 may be a structure having an opened upper part, and the battery pack 1000 according to the present embodiment may further include a pack housing cover 1110 that covers an opened upper part of the pack housing 1100. The battery modules 100 may be housed in an inner space between the pack housing 1100 and the pack housing cover 1110.

Also, the battery pack 1000 according to the present embodiment may further include a sealing member 1120 that is located between the pack housing 1100 and the pack housing cover 1110 for internal sealing.

The fixing bracket 1200 is a structure that fixes the battery module 100 to the pack housing 1100. The number of fixing brackets 1200 is not particularly limited, and the number of battery modules 100 fixed by the fixing bracket 1200 is also not particularly limited. In Fig. 1, a plurality of fixing brackets 1200 are shown as an example, and a state in which one fixing bracket 1200 fixes the two battery modules 100 to the pack housing 1100 is shown.

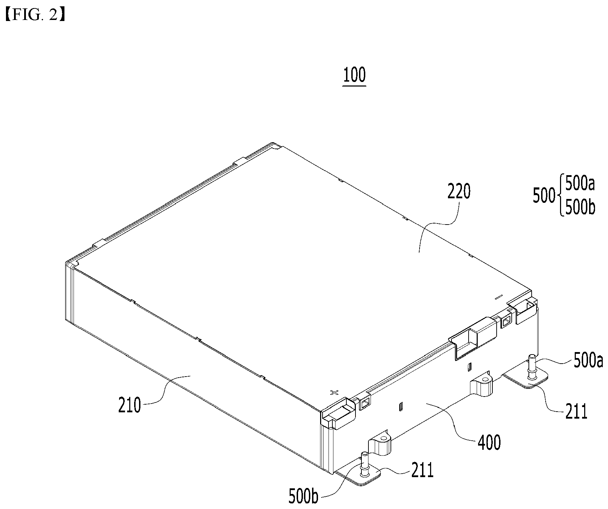

Next, the battery module and the battery cell according to the present embodiment will be described in detail with reference to Figs. 2 to 4.

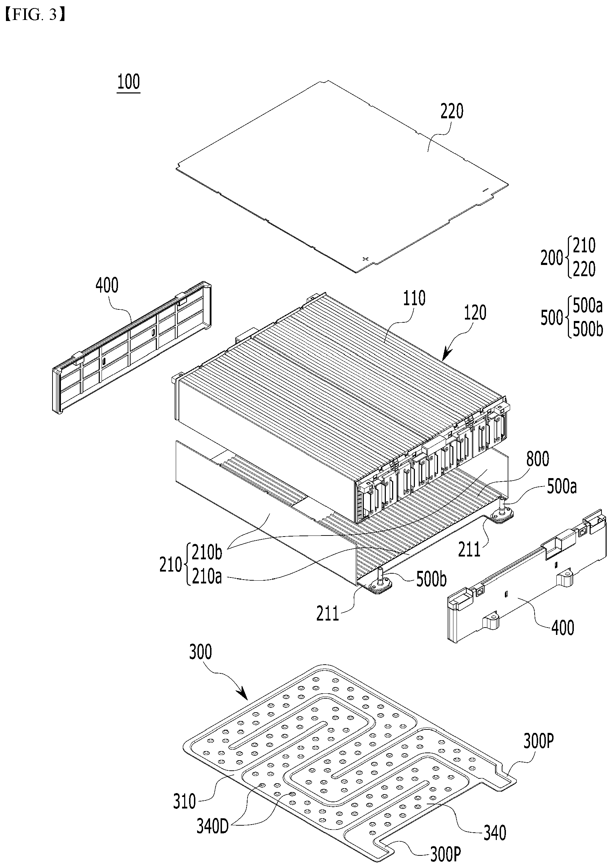

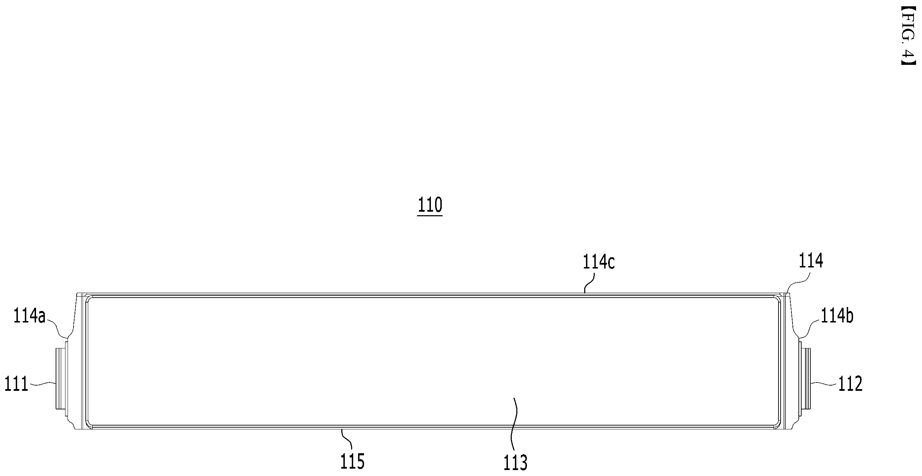

Fig. 2 is a perspective view showing a battery module included in the battery pack of Fig. 1. Fig. 3 is an exploded perspective view of the battery module of Fig. 2. Fig. 4 is a perspective view showing a battery cell according to one embodiment of the present invention.

Referring to Figs. 2 to 4, the battery module 100 includes a plurality of battery cells 110. Specifically, the battery module 100 may include a battery cell stack 120 in which a plurality of battery cells 110 are stacked, a module frame 200 that houses the battery cell stack 120, a heat sink 300 that is located under the lower-side part 210a of the module frame 200, and end plates 400 that are located on the opened both sides of the module frame 200.

First, the battery cell 110 may be a pouch-type battery cell. Such a pouch-type battery cell may be formed by housing an electrode assembly in a pouch case of a laminated sheet including a resin layer and a metal layer, and then fusing the outer periphery of the pouch case. Such battery cells 110 may be formed in a rectangular sheet-like structure. Specifically, the battery cell 110 according to the present embodiment has a structure in which two electrode leads 111 and 112 face each other and protrude from one end 114a and the other end 114b of the cell main body 113, respectively. The battery cell 110 can be produced by joining both ends 114a and 114b of a cell case 114 and one side part 114c connecting them in a state in which an electrode assembly (not shown) is housed in a cell case 114. In other words, the battery cell 110 according to the present embodiment has a total of three sealing parts, and the remaining other side part may be composed of a connection part 115. Between both ends 114a and 114b of the battery case 114 may be defined as the longitudinal direction of the battery cell 110, and between one side part 114c connecting both ends 114a and 114b of the battery case 114 and the connection part 115 may be defined as a width direction of the battery cell 110.

Meanwhile, only the battery cell 110 having a structure in which the electrode leads 111 and 112 protrudes in both directions of one side and the other side has been described, but in another embodiment, of course, a unidirectional pouch-type battery cell in which the electrode leads protrude together in one direction is available.

The battery cell 110 may be composed by a plurality of numbers, and the plurality of battery cells 110 may be stacked so as to be electrically connected to each other, thereby forming a battery cell stack 120. The battery cell case 114 generally has a laminated structure of resin layer/metal thin film layer/resin layer. For example, when the surface of the battery case is formed of an O (oriented)-nylon layer, it tends to slide easily due to external impact when stacking a plurality of battery cells to form a medium or large-sized battery module. Therefore, in order to prevent this problem and maintain a stable stacked structure of battery cells, an adhesive member such as a cohesive-type adhesive such as a double-sided tape or a chemical adhesive bonded by chemical reaction during adhesion can be attached to the surface of the battery case to form a battery cell stack 120.

The module frame 200 that houses the battery cell stack 120 may include an upper cover 220 and a U-shaped frame 210.

The U-shaped frame 210 may include a lower-side part 210a and two side surface parts 210b that extend upward from both ends of the lower-side part 210a. The lower-side part 210a may cover the lower surface of the battery cell stack 120, and the side surface part 210b may cover both side surfaces of the battery cell stack 120.

The upper cover 220 may be formed in a single plate-shaped structure that covers the lower surface wrapped by the U-shaped frame 210 and the remaining upper surface (z-axis direction) excluding the both side surfaces. The upper cover 220 and the U-shaped frame 210 can be joined by welding or the like in a state in which the corresponding corner portions are in contact with each other, thereby forming a structure that covers the battery cell stack 120 vertically and horizontally. The battery cell stack 120 can be physically protected through the upper cover 220 and the U-shaped frame 210. For this purpose, the upper cover 220 and the U-shaped frame 210 may include a metal material having a predetermined strength.

Meanwhile, although not specifically illustrated, the module frame 200 according to a modification may be a mono frame in the form of a metal plate in which the upper surface, the lower surface, and both side surfaces are integrated. That is, this is not a structure in which the U-shaped frame 210 and the upper cover 220 are coupled with each other, but a structure in which the upper surface, the lower surface, and both side surfaces are integrated by being manufactured by extrusion molding.

The end plates 400 may be formed so that they are located on opened both sides of the module frame 200 opposing to each other so as to cover the battery cell stack 120. That is, the two end plates 400 may be located on the opened both sides of the module frame 200 and joined to the module frame 200 by welding or the like. The end plate 400 can physically protect the battery cell stack 120 and other electrical components from external impact.

The battery module 100 according to the present embodiment may include a cooling port 500, wherein a coolant is supplied to the heat sink 300 through the cooling port 500, and the coolant may be discharged from the heat sink 300. Specifically, the cooling port 500 may include a coolant injection port 500a and a coolant discharge port 500b that are spaced apart from each other.

The module frame 200 according to the present embodiment may include a module frame protrusion 211 that protrudes from the lower-side part 210a of the module frame 200 so as to pass the end plate 400. The cooling port 500 may be formed on the module frame protrusion 211. Coolant flows into the heat sink 300 through the coolant injection port 500a of the cooling port 500, and then the coolant can be discharged from the heat sink 300 through the coolant discharge port 500b of the cooling port 500.

As described above, the heat sink 300 according to the present embodiment may be located under the lower-side part 210a of the module frame 200. The heat sink 300 may include a frame part 310 that forms the skeleton of the heat sink 300 and is directly joined to the lower-side part 210a of the module frame 200 by welding or the like and a recessed part 340 formed to be recessed downward from the frame part 310. The recessed part 340 becomes a path through which the coolant flows. In addition, the heat sink 300 may include heat sink protrusions 300P that protrude from one side of the heat sink 300 to a portion where the module frame protrusion 211 is located. That is, the recessed part 340 may extend to the two heat sink protrusions 300P, wherein the two heat sink protrusions 300P may be a portion through which the coolant flows in and a portion through which the coolant is discharged, respectively. For this purpose, the heat sink protrusion 300P may be located so as to correspond to the module frame protrusion 211 on which the cooling port 500 is formed.

The heat sink protrusion 300P and the module frame protrusion 211 may be directly joined to each other by welding or the like.

The recessed part 340 of the heat sink 300 corresponds to a portion in which the frame part 310 is formed to be recessed downward. The recessed part 340 may be a tube having a U-shaped cross section cut vertically with respect to the direction in which the coolant flow path extends, and the lower-side part 210a may be located on the opened upper side of the U-shaped tube. While the frame part 310 of the heat sink 300 being in contact with the lower-side part 210a, the space between the recessed part 340 and the lower-side part 210a becomes an area in which the coolant flows. That is, the lower-side part 210a may function as an upper plate for the heat sink 300. Thereby, the lower-side part 210a of the module frame 200 can be in direct contact with the coolant.

The method for preparing the recessed part 340 of the heat sink 300 is not particularly limited, but the U-shaped recessed part 340 with an opened upper side can be formed by providing a structure that is recessed and formed to the plate-like heat sink 300.

The recessed part 340 may extend from one of the heat sink protrusions 300P to the other as described above. The coolant supplied through the coolant injection port 500a first flows into the space between the recessed part 340 and the lower-side part 210a. Then, the coolant moves along the recessed part 340 and is finally discharged through the coolant discharge port 500b.

Meanwhile, a thermal conductive resin layer 800 including a thermal resin may be located between the lower-side part 210a of the module frame 200 and the battery cell stack 120. The thermal conductive resin layer 800 can be formed by applying a thermal resin to the lower-side part 210a and then curing the applied thermal conductive resin. Particularly, in the battery cell 110 in which the electrode leads 111 and 112 (see Fig. 4) protrude in the opposing both directions, heat generation is excessive in the portions adjacent to the electrode leads 111 and 112 of the battery cells 110 in the battery cell stack 120, wherein the thermal conductive resin layer 800 may be divided and formed into two sections so as to correspond to both parts of the battery cell stack 120 where heat generation is excessive. In Fig. 3, a state where the thermal conductive resin layer 800 is divided and applied into two sections is shown.

The thermal conductive resin may include a thermal conductive adhesive material, and specifically, may include at least one of a silicone material, a urethane material, and an acrylic material. The thermal conductive resin is a liquid during application but is cured after application, so that it can perform the role of fixing one or more battery cells 110 constituting the battery cell stack 120. Further, since the thermal conductive resin has excellent heat transfer properties, it is possible to quickly transfer the heat generated in the battery module 110 to the lower-side.

The battery module 100 according to the present embodiment realizes a cooling integrated structure of the module frame 200 and the heat sink 300 and thus can further improve the cooling performance. The lower-side part 210a of the module frame 200 serves to correspond to the upper plate of the heat sink 300, thereby capable of realizing a cooling integrated structure. The cooling efficiency increases due to direct cooling, and through a structure in which the heat sink 300 is integrated with the lower-side part 210a of the module frame 200, the space utilization rate of the battery module 100 and the battery pack 1000 to which the battery module 100 is mounted can be further improved.

Specifically, heat generated from the battery cell 110 can pass through a thermal conductive resin layer 800, the lower-side part 210a of the module frame 200 and the heat sink 300 in which coolant flows, and then can be transferred to the outside of the battery module 100. By removing the unnecessary cooling structure according to the conventional one, the heat transfer path can be simplified and an air gap between respective layers can be reduced, so that the cooling efficiency or performance can be enhanced. Particularly, the lower-side part 210a is composed of an upper plate of the heat sink 300, and the lower-side part 210a directly abuts on the coolant, which is thus advantageous in that more direct cooling through the coolant is possible.

Further, through the removal of the unnecessary cooling structure, the height of the battery module 100 is reduced and thus, the cost can be reduced and the space utilization rate can be increased. Furthermore, since the battery module 100 can be arranged in a compact manner, the capacity or output of the battery pack 1000 including a plurality of battery modules 100 can be increased.

Meanwhile, the lower-side part 210a of the module frame 200 may be weld-joined to a frame part 310 where the recessed part 340 is not formed in the heat sink 300. In the present embodiment, the cooling integrated structure of the lower-side part 210a and the heat sink 300 not only improves the above-mentioned cooling performance but also can have the effect of supporting the load of the battery cell stack 120 housed in the module frame 200 and reinforcing the stiffness of the battery module 100. In addition, the frame part 310 and the lower-side part 210a of the module frame 200 are sealed through a welding junction, and the like, so that in the recessed part 340 formed inside the frame part 310, the coolant can flow without leakage.

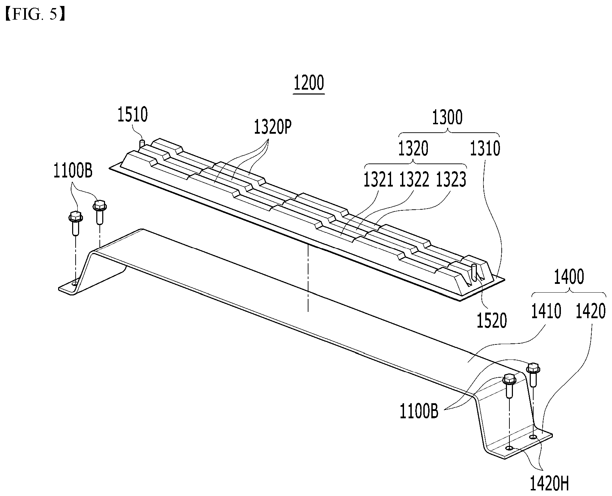

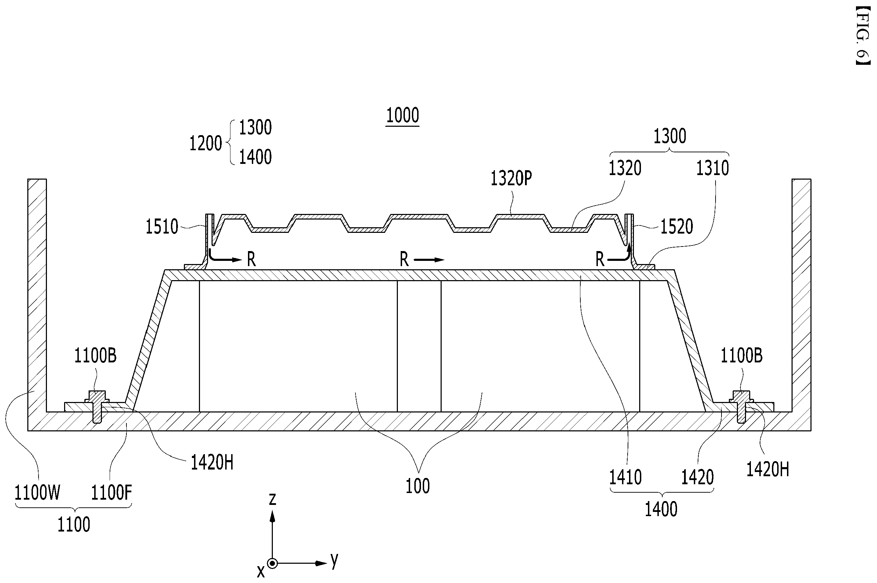

Next, the fixing bracket according to the present embodiment will be described in detail with reference to Figs. 5 and 6.

Fig. 5 is a perspective view showing a fixing bracket according to one embodiment of the present invention.

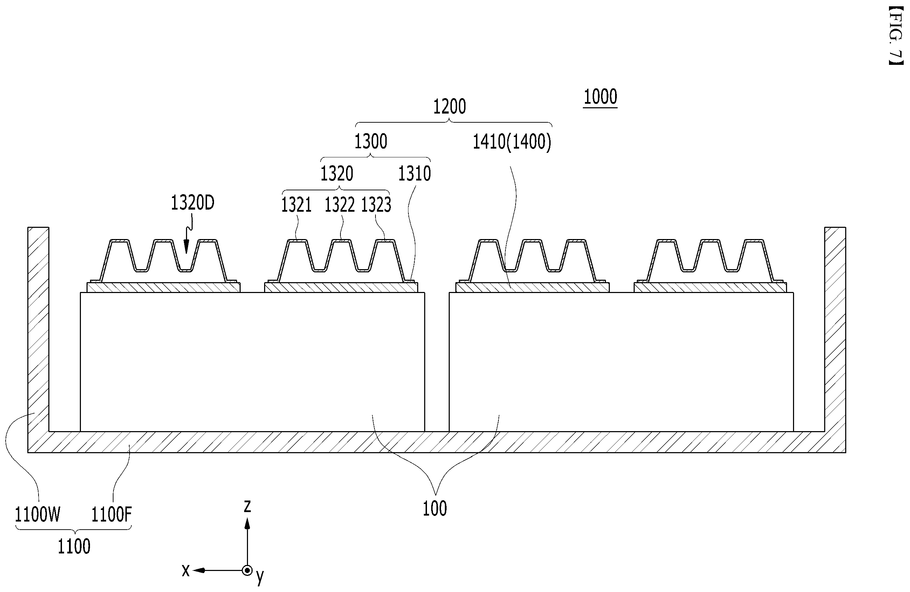

Fig. 6 is a cross-sectional view which shows a cross section taken along the cutting line A-A' of Fig. 1. Fig. 7 is a cross-sectional view which shows a cross section taken along the cutting line B-B' of Fig. 1. However, in Figs. 6 and 7, the illustration of the pack housing cover is omitted, and the battery module 100 and the pack housing 1100 are schematically shown.

Referring to Figs. 5 to 7 together with Fig. 1, the fixing bracket 1200 according to the present embodiment includes a lower plate 1400 adhered closely to the upper surface of the battery module 100 and an upper plate 1300 located on lower plate 1400. A cooling flow path through which the coolant R passes is formed between the upper plate 1300 and the lower plate 1400. Here, the upper surface of the battery module 100 may be the upper surface of the upper cover 220 (see Fig. 3).

The lower plate 1400 includes a fixing part 1410 adhered closely to the upper surface of the battery module 100 and a fastening part 1420 extending from the fixing part 1410 to the bottom part 1100F of the pack housing 1100. The pack housing 1100 may be a structure having an opened upper part as described above, and may include a bottom part 1100F and a partition wall part 1100W. The battery module 100 according to the present embodiment may be located on the bottom part 1100F.

The fastening part 1420 may be fastened to the bottom part 1100F of the pack housing 1100. The fastening method is not particularly limited, but may be fastened with a bolt as an example. Specifically, a fastening hole 1420H may be formed in the fastening part 1420, and the bolt part 1100B may pass the fastening hole 1420H and be fastened and fixed to the bottom part 1100F of the pack housing 1100.

The fixing part 1410 of the lower plate 1400 is adhered closely to the upper surface of the battery module 100, and the fastening part 1420 extending from the fixing part 1410 is fastened to the bottom part 1100F of the pack housing 1100, so that the battery module 100 is fixed to the pack housing 1100. Even if the battery pack 1000 according to the present embodiment is mounted in a vehicle where external shock or vibration is excessive, the battery module 100 can be stably fixed.

The upper plate 1300 is located on the lower plate 1400 in order to form a cooling flow path in the fixing bracket 1200. Specifically, the upper plate 1300 includes a main body part 1320 and a junction part 1310 extending from the main body part 1320 and joined to the lower plate 1400.

The junction part 1310 and the lower plate 1400 may be weld-joined. The junction part 1310 is joined to the fixing part 1410 that is adhered closely to the upper surface of the battery module 100 among the lower plates 1400.

A cooling flow path through which coolant R passes is formed between the main body part 1320 and the lower plate 1400. That is, while the junction part 1310 is joined to the fixing part 1410, the space between the body part 1320 and the fixing part 1410 becomes an area through which the coolant R passes, i.e., a cooling flow path.

The fixing bracket according to the present embodiment may include an inlet port 1510 and an outlet port 1520 that are connected to the cooling flow path. Specifically, the inlet port 1510 and the outlet port 1520 may be located at both ends of the main body part 1320 of the upper plate 1300, respectively. The inlet port 1510 and the outlet port 1520 may be connected to a space between the main body part 1320 and the fixing part 1410. The coolant R supplied through the inlet port 1510 is first flowed into the space between the main body part 1320 and the fixing part 1410. After that, the coolant R moves along the main body part 1320 and is finally discharged through the outlet port 1520. Although not specifically shown in the figure, the inlet port 1510 and the outlet port 1520 are connected to a coolant pipe, a cooling motor, and the like, so that a coolant circulation system as described above can be formed.

Cooling of the lower parts of the battery cells 110 can be performed through the heat sink 300 of the battery module 100 described above. That is, referring to Fig. 4, cooling may be performed in the area corresponding to the connection part 115 of the battery cell 110.

Moreover, the battery pack 1000 according to the present embodiment forms a cooling flow path inside the fixing bracket 1200 for fixing the battery module 100, so that the upper part of the battery cells 110 can be cooled. That is, referring to Fig. 4, the cooling can be performed in an area corresponding to one side part 114c of the battery cell 110. The upper part of the battery cell 110 is also cooled, which is thus advantageous in that the cooling performance for the battery cells 110 is improved and the cooling deviation between the battery cells 110 is reduced. Particularly, in the present embodiment, in order to cool the upper part of the battery cell 110, complicated parts such as a separate heat sink are not provided on the upper part of the battery module, but the coolant flow path is formed in the fixing bracket 1200, whereby no complicated design or manufacturing process is required.

Meanwhile, according to one embodiment of the present invention, the battery module 100 may be formed by a plurality of numbers within the pack housing 1100, and the fixing bracket 1200 can fix the plurality of battery modules 100 to the pack housing 1100. Fig. 1 shows a state in which one fixing bracket 1200 fixes two battery modules 100 to a pack housing 1100. Taken together, any one fixing bracket 1200 may fix the plurality of battery modules 100 to the pack housing 1100 and simultaneously perform a cooling function for the upper surfaces of the plurality of battery modules 100.

Referring to Figs. 5 to 7 again, a recessed part 1320D recessed downward is formed in the main body part 1320 according to the present embodiment, and the main body part 1320 may include a plurality of passage parts 1321, 1322 and 1323 that are partitioned by the recessed part 1320D. In one example, Figs. 5 and 7 show a state in which two recessed parts 1320D are formed in one main body part 1320, and thus, three passage parts 1321, 1322 and 1323 are provided. However, the number of the recessed parts 1320D and the passage parts 1321, 1322 and 1323 is not particularly limited. Further, the passage parts 1321, 1322 and 1323 may be partially partitioned. In other words, the cooling flow paths of the passage parts 1321, 1322 and 1323 may not be completely partitioned, but the cooling flow paths may be shared with each other at the lower end.

Such passage parts 1321, 1322 and 1323 may extend along a direction parallel to the direction of the cooling flow path. Here, the direction of the cooling flow path is the direction between the inlet port 1510 and the outlet port 1520, and may be a direction in which the coolant R moves, that is, a direction parallel to the y-axis in Fig. 6. Each of the passage parts 1321, 1322 and 1323 extends in a direction parallel to the direction of the cooling flow path, and the coolant R may flow along each passage parts 1321 , 1322 and 1323.

Further, the passage parts 1321, 1322 and 1323 may be arranged while being spaced apart from each other along a direction perpendicular to the direction of the cooling flow path. Fig. 7 shows a state in which three passage parts 1321, 1322 and 1323 are arranged along a direction perpendicular to the direction of the cooling flow path, that is, the x-axis direction.

On the other hand, referring to Figs. 5 and 6, a plurality of protrusions 1320P that protrude upward may be formed in the main body part 1320 according to the present embodiment. Such protrusions 1320P may be arranged along a direction parallel to the direction of the cooling flow path while being spaced apart from each other. More specifically, a plurality of protrusions 1320P may be formed on each of the passage parts 1321 , 1322 and 1323.

As described above, the upper plate 1300 according to the present embodiment forms a cooling flow path in the fixing bracket 1200, and also performs the function of dissipating heat generated from the upper part of the battery module 100 in addition to fixing the battery module 100. At this time, a recessed part 1320D or a protrusion 1320P are formed in the main body part 1320 according to the present embodiment, thereby capable of increasing the outer surface area of the main body part 1320, and increasing the heat dissipation effect of the upper part of the battery module 100. Further, the recessed part 1320D or the protrusion 1320P may form a kind of beading structure to increase stiffness against warpage of the fixing bracket 1200. Therefore, the structural safety of the battery pack 1000 can be complemented.

Meanwhile, although not specifically shown in the figure, in another embodiment of the present invention, a coolant pipe may be located between the upper plate 1300 and the lower plate 1400, and the coolant may flow along the coolant pipe to form a cooling flow path. More specifically, a separate coolant pipe is arranged in the space between the main body part 1320 of the upper plate 1300 and the fixing part 1410 of the lower plate 1400, and the coolant may flow inside that coolant pipe.

On the other hand, the coolant used herein is a medium for cooling, and is not particularly limited, but it may be cooling water. That is, the battery pack 1000 according to the present embodiment may have a water-cooled cooling structure.

Meanwhile, referring to Fig. 1 again, the battery pack 1000 according to the present embodiment includes various control and protection systems such as a BDU (battery disconnect unit) module 1600, a BMS (battery management system) module 1700, and a cooling system. The BDU module 1600 forms a high voltage (HV) line with the battery modules 100, and performs the function of stably supplying or cutting off power to the power system of the device and protecting the power system of the device when a fault current occurs. The BMS module 1700 forms a low voltage (LV) line with the battery modules 100 and performs the function of controlling the temperature or voltage of each battery module 100 based on the measured temperature or voltage data.

The battery pack can be applied to various devices. Specifically, it can be applied to vehicle means such as an electric bike, an electric vehicle, and a hybrid electric vehicle, or ESS (Energy Storage System), but is not limited thereto and can be applied to various devices capable of using a secondary battery.

The terms representing directions such as the front side, the rear side, the left side, the right side, the upper side, and the lower side have been used in the present embodiment, but the terms used are provided simply for convenience of description and may become different according to the position of an object, the position of an observer, or the like.

### [Description of Reference Numerals]

100: battery module
1000: battery pack
1100: pack housing
1200: fixing bracket
1300: upper plate
1400: lower plate

## Claims

1. A battery pack (1000) comprising:
a battery module (100) including battery cells (110);
a pack housing (1100) that houses the battery module (100); and
a fixing bracket (1200) that fixes the battery module (100) to the pack housing (1100),
wherein the fixing bracket (1200) comprises a lower plate (1400) and an upper plate (1300) located on the lower plate (1400),
wherein the lower plate (1400) comprises a fixing part (1410) adhered closely to the upper surface of the battery module (100) and a fastening part (1420) extending from the fixing part (1410) to a bottom part of the pack housing (1100),
wherein the upper plate (1300) comprises a main body part (1320) and a junction part (1310) extending from the main body part (1320) and joined to the fixing part (1410) and
wherein a cooling flow path through which coolant (R) passes is formed between the main body part (1320) of the upper plate (1300) and the fixing part (1410) of the lower plate (1400).

2. The battery pack (1000) according to claim 1, wherein:
the fixing bracket (1200) comprises an inlet port (1510) and an outlet port (1520) that are connected to the cooling flow path.

3. The battery pack (1000) according to claim 1, wherein:
the fastening part (1420) is fastened to the bottom part of the pack housing (1100).

4. The battery pack (1000) according to claim 3, wherein:
a fastening hole (1420H) is formed in the fastening part (1420), and a bolt part passes through the fastening hole (1420H) to be fastened to the bottom part of the pack housing (1100).

5. The battery pack (1000) according to claim 1, wherein:
the junction part (1310) and the lower plate (1400) are weld-joined.

6. The battery pack (1000) according to claim 1, wherein:
the cooling flow path is formed between the main body part (1320) and the lower plate (1400).

7. The battery pack (1000) according to claim 1, wherein:
a recessed part (1320D) that is recessed downward is formed in the main body part (1320), and
the main body part (1320) comprises a plurality of passage parts (1321, 1322, 1323) partitioned by the recessed part (1320D).

8. The battery pack (1000) according to claim 7, wherein:
each of the passage parts (1321, 1322, 1323) extends along a direction parallel to the direction of the cooling flow path.

9. The battery pack (1000) according to claim 1, wherein:
a plurality of protrusions (1320P) that protrudes upward are formed on the main body part (1320).

10. The battery pack (1000) according to claim 9, wherein:
the protrusions (1320P) are arranged along a direction parallel to the direction of the cooling flow path while being spaced apart from each other.

11. The battery pack (1000) according to claim 1, wherein:
the battery module (100) is formed by a plurality of numbers, and
the fixing bracket (1200) fixes a plurality of battery modules (100) to the pack housing (1100).

12. The battery pack (1000) according to claim 1, wherein:
a coolant pipe is located between the upper plate (1300) and the lower plate (1400), and
the coolant (R) flows along the inside of the coolant pipe to form the cooling flow path.

13. A device comprising the battery pack (1000) according to claim 1.

## Patentansprüche

1. Batteriepack (1000), umfassend:
ein Batteriemodul (100), das Batteriezellen (110) aufweist;
ein Packgehäuse (1100), das das Batteriemodul (100) aufnimmt; und
ein Befestigungsbügel (1200), der das Batteriemodul (100) an dem Packgehäuse (1100) befestigt,
wobei der Befestigungsbügel (1200) eine untere Platte (1400) und eine obere Platte (1300) umfasst, die sich auf der unteren Platte (1400) befindet,
wobei die untere Platte (1400) ein Befestigungsteil (1410) umfasst, das eng an der oberen Oberfläche des Batteriemoduls (100) gehalten ist, und ein Befestigungsteil (1420) umfasst, das sich von dem Befestigungsteil (1410) zu einem unteren Teil des Packgehäuses (1100) erstreckt,
wobei die obere Platte (1300) ein Hauptkörperteil (1320) und ein Verbindungsteil (1310) umfasst, das sich von dem Hauptkörperteil (1320) erstreckt und mit dem Befestigungsteil (1410) verbunden ist, und
wobei ein Kühlströmungsweg, durch den Kühlmittel (R) fließt, zwischen dem Hauptkörperteil (1320) der oberen Platte (1300) und dem Befestigungsteil (1410) der unteren Platte (1400) ausgebildet ist.

2. Batteriepack (1000) nach Anspruch 1, wobei:
der Befestigungsbügel (1200) eine Einlassöffnung (1510) und eine Auslassöffnung (1520) umfasst, die mit dem Kühlströmungsweg verbunden sind.

3. Batteriepack (1000) nach Anspruch 1, wobei:
das Befestigungsteil (1420) am unteren Teil des Packgehäuses (1100) befestigt ist.

4. Batteriepack (1000) nach Anspruch 3, wobei:
ein Befestigungsloch (1420H) in dem Befestigungsteil (1420) ausgebildet ist und ein Bolzenteil durch das Befestigungsloch (1420H) ragt, um am unteren Teil des Packgehäuses (1100) befestigt zu werden.

5. Batteriepack (1000) nach Anspruch 1, wobei:
das Verbindungsteil (1310) und die untere Platte (1400) durch Schweißen verbunden sind.

6. Batteriepack (1000) nach Anspruch 1, wobei:
der Kühlströmungsweg zwischen dem Hauptkörperteil (1320) und der unteren Platte (1400) ausgebildet ist.

7. Batteriepack (1000) nach Anspruch 1, wobei:
in dem Hauptkörperteil (1320) ein vertieftes Teil (1320D)ausgebildet ist, das nach unten vertieft ist, und
das Hauptkörperteil (1320) eine Vielzahl von Durchgangsteilen (1321, 1322, 1323) umfasst, die durch das vertiefte Teil (1320D) unterteilt sind.

8. Batteriepack (1000) nach Anspruch 7, wobei:
sich jedes der Durchgangsteile (1321, 1322, 1323) entlang einer Richtung parallel zu der Richtung des Kühlströmungswegs erstreckt.

9. Batteriepack (1000) nach Anspruch 1, wobei:
eine Vielzahl von Vorsprüngen (1320P), die nach oben vorstehen, an dem Hauptkörperteil (1320) ausgebildet sind.

10. Batteriepack (1000) nach Anspruch 9, wobei:
die Vorsprünge (1320P) entlang einer Richtung parallel zu der Richtung des Kühlströmungswegs angeordnet sind, während sie voneinander beabstandet sind.

11. Batteriepack (1000) nach Anspruch 1, wobei:
das Batteriemodul (100) als Vielfaches gebildet ist, und
der Befestigungsbügel (1200) eine Vielzahl von Batteriemodulen (100) an dem Packgehäuse (1100) befestigt.

12. Batteriepack (1000) nach Anspruch 1, wobei:
ein Kühlmittelrohr zwischen der oberen Platte (1300) und der unteren Platte (1400) angeordnet ist, und
das Kühlmittel (R) entlang der Innenseite des Kühlmittelrohrs strömt, um den Kühlströmungsweg zu bilden.

13. Vorrichtung, umfassend den Batteriepack (1000) nach Anspruch 1.

## Revendications

1. Bloc de batterie (1000) comportant :
un module de batterie (100) comprenant des éléments de batterie (110) ;
un boîtier de bloc (1100) qui reçoit le module de batterie (100) ; et
un support de fixation (1200) qui fixe le module de batterie (100) au boîtier de bloc (1100),
dans lequel le support de fixation (1200) comporte une plaque inférieure (1400) et une plaque supérieure (1300) située sur la plaque inférieure (1400),
dans lequel la plaque inférieure (1400) comporte une partie de fixation (1410) collée étroitement à la surface supérieure du module de batterie (100) et une partie formant attache (1420) s'étendant depuis la partie de fixation (1410) jusqu'à une partie inférieure du boîtier de bloc (1100),
dans lequel la plaque supérieure (1300) comporte une partie formant corps principal (1320) et une partie formant jonction (1310) s'étendant depuis la partie formant corps principal (1320) et reliée à la partie de fixation (1410) et
dans lequel un trajet d'écoulement de refroidissement au travers duquel passe le réfrigérant (R) est formé entre la partie formant corps principal (1320) de la plaque supérieure (1300) et la partie de fixation (1410) de la plaque inférieure (1400).

2. Bloc de batterie (1000) selon la revendication 1, dans lequel :
le support de fixation (1200) comporte un orifice d'entrée (1510) et un orifice de sortie (1520) qui sont reliés au trajet d'écoulement de refroidissement.

3. Bloc de batterie (1000) selon la revendication 1, dans lequel :
la partie formant attache (1420) est solidement attachée à la partie inférieure du boîtier de bloc (1100).

4. Bloc de batterie (1000) selon la revendication 3, dans lequel :
un trou d'attache (1420H) est formé dans la partie formant attache (1420), et une partie formant boulon passe au travers du trou d'attache (1420H) à des fins d'attache à la partie inférieure du boîtier de bloc (1100).

5. Bloc de batterie (1000) selon la revendication 1, dans lequel :
la partie formant jonction (1310) et la plaque inférieure (1400) sont assemblées par soudage.

6. Bloc de batterie (1000) selon la revendication 1, dans lequel :
le trajet d'écoulement de refroidissement est formé entre la partie formant corps principal (1320) et la plaque inférieure (1400).

7. Bloc de batterie (1000) selon la revendication 1, dans lequel :
une partie évidée (1320D) qui est évidée vers le bas est formée dans la partie formant corps principal (1320), et
la partie formant corps principal (1320) comporte une pluralité de parties formant passage (1321, 1322, 1323) séparées par la partie évidée (1320D).

8. Bloc de batterie (1000) selon la revendication 7, dans lequel :
chacune des parties formant passage (1321, 1322, 1323) s'étend le long d'une direction parallèle à la direction du trajet d'écoulement de refroidissement.

9. Bloc de batterie (1000) selon la revendication 1, dans lequel :
les parties d'une pluralité de parties saillantes (1320P) qui font saillie vers le haut sont formées sur la partie formant corps principal (1320).

10. Bloc de batterie (1000) selon la revendication 9, dans lequel :
les parties saillantes (1320P) sont agencées dans une direction parallèle à la direction du trajet d'écoulement de refroidissement tout en étant espacées les unes des autres.

11. Bloc de batterie (1000) selon la revendication 1, dans lequel :
le module de batterie (100) est formé par une pluralité de nombres, et
le support de fixation (1200) fixe une pluralité de modules de batterie (100) au boîtier de bloc (1100).

12. Bloc de batterie (1000) selon la revendication 1, dans lequel :
un tuyau de réfrigérant est situé entre la plaque supérieure (1300) et la plaque inférieure (1400), et
le réfrigérant (R) s'écoule le long de l'intérieur du tuyau de réfrigérant pour former le trajet d'écoulement de refroidissement.

13. Dispositif comportant le bloc de batterie (1000) selon la revendication 1.
